(19) Europäisches Patentamt
European Patent Office
Office européen des brevets

(11) **EP 2 365 679 B1**

(12) **EUROPEAN PATENT SPECIFICATION**

(45) Date of publication and mention
of the grant of the patent:
**24.10.2012   Bulletin 2012/43**

(51) Int Cl.:
*H04L 29/08* (2006.01)          *H04L 29/06* (2006.01)
*G06Q 10/10* (2012.01)

(21) Application number: **11001478.4**

(22) Date of filing: **22.02.2011**

(54) **Secret interest groups in online social networks**

Geheime Interessengruppen in sozialen Online-Netzwerken

Groupes d'intérêt secrets dans des réseaux sociaux en ligne

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2010   US 715366**

(43) Date of publication of application:
**14.09.2011   Bulletin 2011/37**

(73) Proprietor: **SAP AG**
**69190 Walldorf (DE)**

(72) Inventors:
• **Sorniotti, Alessandro**
  **69190 Walldorf (DE)**
• **Refik, Molva**
  **69190 Walldorf (DE)**

(74) Representative: **Müller-Boré & Partner**
**Patentanwälte**
**Grafinger Straße 2**
**81671 München (DE)**

(56) References cited:
**EP-A1- 2 023 528**

• **ANGELA DALTON, AND VARUN MARUPADI: "SmokeScreen: Flexible Privacy Controls for Presence-Sharing", ACM, 2 PENN PLAZA, SUITE 701 - NEW YORK USA, 11 June 2007 (2007-06-11), - 14 May 2007 (2007-05-14), pages 233-245, XP040061024,**

• **DATABASE COMPENDEX [Online] ENGINEERING INFORMATION, INC., NEW YORK, NY, US; 2010, SORNIOTTI A ET AL: "Secret Interest Groups (SIGs) in social networks with an implementation on Facebook", XP002636343, Database accession no. E20102913087317 -& PROCEEDINGS OF THE ACM SYMPOSIUM ON APPLIED COMPUTING - APPLIED COMPUTING 2010 - THE 25TH ANNUAL ACM SYMPOSIUM ON APPLIED COMPUTING 2010 ASSOCIATION FOR COMPUTING MACHINERY USA, 22 March 2010 (2010-03-22), - 26 March 2010 (2010-03-26), pages 621-628, XP002636970, DOI: DOI: 10.1145/1774088.1774219**

## Description

### FIELD OF THE INVENTION

The invention relates to creation of secret interest groups in online social networks. More precisely, the invention relates to creation of a secret interest group framework with cryptographic algorithms and protocols.

### BACKGROUND OF THE INVENTION

Online Social Networks (OSNs) are becoming one of the most prominent communication technologies. Platforms such as Facebook now count millions of users that share information every day.

A problem, which is particularly felt among OSNs, is identity theft and identity spoofing. The root of the problem lies in the fact that in OSNs there is little or no verification of whether a person that joins the social network is really who he or she claims to be. Furthermore, social network users base their decision on whether to accept a friendship request on name, pictures, and fragments of text, which is information that is often easily retrievable from elsewhere on the internet. It is therefore relatively simple for an impostor to set up a profile on an OSN, pretending to be somebody else, and then to convince other users to accept friendship requests, and consequently to share their private information with the impostor.

Document L.P. Cox et al "SmokeScreen: Flexible Privacy Controls for Presence-Sharing", MobiSys'07, June 11-14, 2007 relates to presence-privacy in presence-sharing, a platform for mobile applications. A system, SmokeScreen, is described which provides a mechanism for privacy management in such mobile applications. The describe system operates on two mechanisms, clique signals and opaque identifiers. Clique signals can be broadcast by users and can be activated or deactivated depending on the social environment. Users also broadcast opaque identifiers which are time-, place, and broadcaster-specific and can only be resolved to an identity via a centralized trusted broker.

### SUMMARY OF THE INVENTION

The present invention relates to a computer readable medium as claimed in claim 1, a computer-implemented method as claimed in claim 5, and a computer system as claimed in claim 10. Preferred embodiments are defined in the dependent claims. Various embodiments of computer implemented methods and systems for secret interest groups in social networks are described herein. In some embodiments, the method includes receiving a friendship request from a first OSN user to a second OSN user and capturing the friendship request by a proxy server. The method also includes extracting cryptographic information of the first and the second user by the proxy server to be used for computation of a cryptographic handshake to verify the membership of the first and the second user to a same secret interest group (SIG). Then, the method continues with creating a modified request from the friendship request by the proxy server through notifying the second user that the first user is a member of the same SIG as the second user when the cryptographic handshake is accomplished and forwarding the modified request to an OSN server. The method further includes receiving a response to the modified request from the second user via the OSN server and sending a message to the first user affirming the co-membership of the second user when the second user has accepted the modified request.

In another embodiment of the invention, the system includes one or more OSN servers within an OSN and at least two OSN users communicating via the OSN. The system also includes a proxy server in communication with the one or more OSN servers, the proxy server having a processor to execute instructions for modifying a friendship request between the at least two OSN users by computing a cryptographic handshake to verify the membership of the at least two OSN users to the same secret interest group (SIG).

These and other benefits and features of embodiments of the invention will be apparent upon consideration of the following detailed description of preferred embodiments thereof, presented in connection with the following drawings.

### BRIEF DESCRIPTION OF THE DRAWINGS

The claims set forth the embodiments of the invention with particularity. The invention is illustrated by way of example and not by way of limitation in the figures of the accompanying drawings in which like references indicate similar elements. The embodiments of the invention, together with its advantages, may be best understood from the following detailed description taken in conjunction with the accompanying drawings.

Figure 1A is a block diagram with an exemplary illustration of the structure and the entities of an Online Social Network (OSN).

Figure 1B is a block diagram with an exemplary illustration of the structure and the entities of an OSN and a Secret Interest Group (SIG) using the OSN potentialities.

Figure 2 is a flow diagram describing a method for verification of personalities in OSNs.
Figure 3 illustrates the operation of a proxy upon a friendship request in an exemplary OSN.
Figure 4 illustrates the operation of a proxy upon a friendship response in an exemplary OSN.
Figure 5 is a block diagram with an exemplary illustration of a system for creating SIGs in OSNs.
Figure 6 is a block diagram of an embodiment of the invention for creating SIGs in OSNs.

## DETAILED DESCRIPTION

Embodiments of techniques for secret interest groups in online social networks are described herein. In the following description, numerous specific details are set forth to provide a thorough understanding of embodiments of the invention. One skilled in the relevant art will recognize however, that the invention can be practiced without one or more of the specific details, or with other methods, components, materials, etc. In other instances, well-known structures, materials, or operations are not shown or described in detail to avoid obscuring aspects of the invention.

Reference throughout this specification to "one embodiment", "this embodiment" and similar phrases, means that a particular feature, structure, or characteristic described in connection with the embodiment is included in at least one embodiment of the present invention. Thus, the appearances of these phrases in various places throughout this specification are not necessarily all referring to the same embodiment. Furthermore, the particular features, structures, or characteristics may be combined in any suitable manner in one or more embodiments.

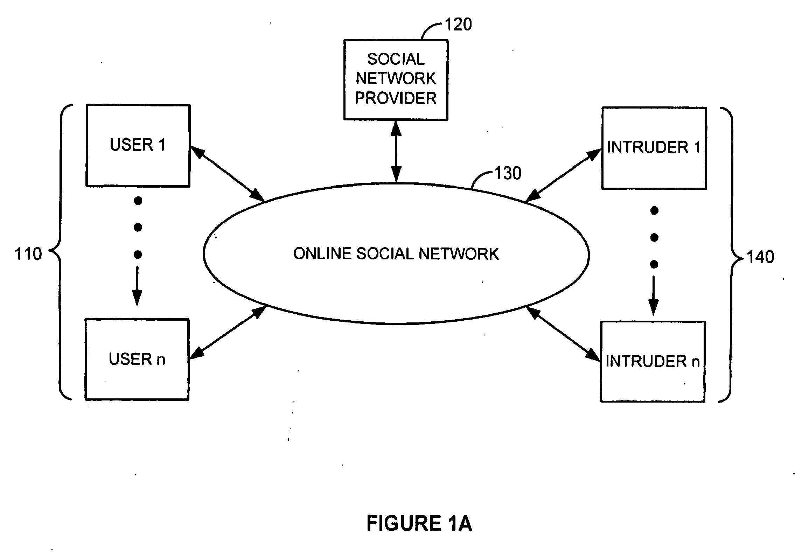

Typically users communicate through Online Social Networks (OSNs) to exchange information, photos, meet people and the like. Figure 1A represents the structure and the entities in such an environment. Users 110 are the actual beneficiaries of the capabilities of an OSN 130. An OSN provider 120 hosts the network. Communication between at least two of the users 110 starts after sending a friendship request, accompanied by identifying information, also provided by the requester. The true identities of the users 110 are not verified so a number of intruders 140 with fake profiles are inevitably part of the OSN 130. The intruders 140 set up profiles in the OSN 130 pretending to be somebody else and thus may be able to convince some of the users 110 to accept friendship requests. Then the users 110 are prone to share their private information with the intruders 140. To improve the security of the process of sending friendship requests in OSN 130, users 110 may be asked to provide credentials along with the friendship request. Such credentials cannot be self generated, but rather generated and maintained after verification by a third party. It is unrealistic to expect a central entity like the OSN provider 120 to handle the credentials for free, but at the same time the users 110 are not likely to pay for such service.

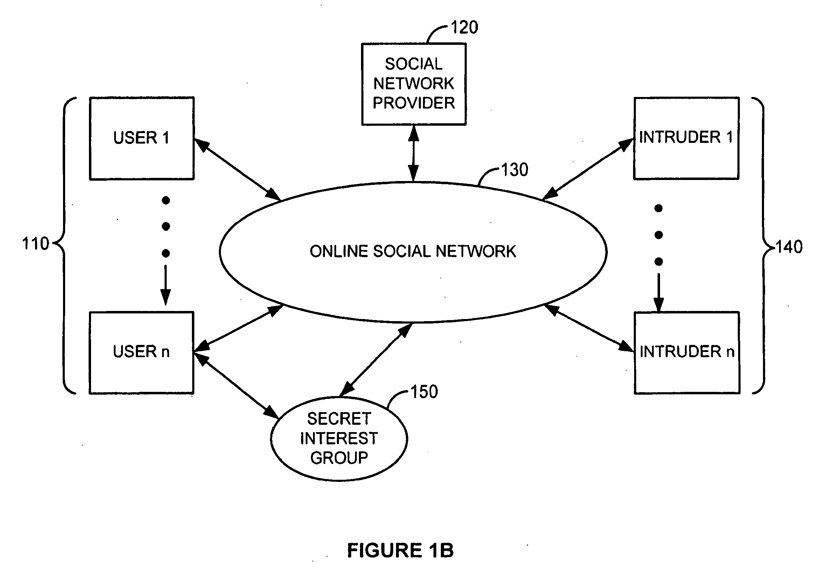

One other solution could be that users 110 create a Secret Interest Group (SIG) 150 outside of the OSN 130, as presented in Figure 1B, issue group membership credentials and present such credentials upon sending friendship requests within the OSN 130. Thus SIG 150, which is a user created group, could be created to discuss confidential or privacy sensitive topics. In one aspect, members of SIG 150 are able to handle joining and leaving of members and to grant or revoke administration privilege to members. In another aspect SIG members may grant credentials to secure the relationship with other members of the SIG 150 in the OSN 130.

In some embodiments, the implementation of the SIG 150 in an OSN 130 is performed by algorithms that deal with authentication, handshaking, and encryption of content among users 110 of the OSN 130. The OSN 130 is used as a transport layer for cryptographic messages. In some embodiments, the SIG 150 is not maintained or administered by a central entity but rather any entitled user may be able to act as a central entity and also the algorithms may be subject to a threshold (thresholdized) in the sense that to be performed successfully, they need the cooperation of a minimum number of entitled users. Thus, the role of the central entity is split and spread among entitled users. For example, the creation of a new SIG 150 is the task of an initial set of SIG managers that create the SIG and handle the joining of the first SIG members. The initial set of SIG managers may reserve the ability of handling the joining of other members to themselves only, or may endorse other members with this capability as well. The difference between SIG managers and SIG members is that the SIG managers are not only SIG members but they are also responsible for appointing new SIG managers and to allow new members to join the SIG. Hence, for joining a SIG, at any point in time the set of SIG managers must be non-empty; and only a set of SIG managers may appoint new SIG managers. To enhance the security of SIGs, one SIG manager alone may not able to perform the task of appointing new SIG managers and handling the joining of new members, instead, the procedures require a minimum number of SIG managers to be involved. In some embodiments, prior to being allowed to join the SIG, a potential member may undergo offline verification carried out by a SIG manager. The purpose of such verification is to ensure that all members are consistent with the SIG joining policy. This procedure is group specific and may require different controls depending on the nature of the SIG.

For example, in a SIG revolving around political militancy; party membership, background check, or face-to-face interview may be the check that a user is required to pass before being admitted in the group. For a SIG representing a project consortium, it may be sufficient to send the membership or managerial credentials using the consortium email address. SIG members and SIG managers receive membership credentials and managerial credentials to certify their roles. An additional requirement may be that no coalition of less than a set number of SIG members or SIG managers may be able to grant a new credential, either membership or managerial. The existence of credentials presumes that they may also be revoked. In some embodiments, proactive techniques may be used for revocation. Proactive techniques include use of time limits embedded in the credentials. This means the credential will expire after some time or after a number of usages. In other embodiments reactive techniques may be used for revocation of credentials by publishing a revocation handle to an authenticated public site. If a single SIG manager credential falls into an intruder's hands, it will not be a problem, because an intruder would need to get hold of at least the set minimum number of SIG managerial credentials. The loss of a SIG membership credential is somehow thornier than the loss of SIG managerial credentials since SIG membership credentials may be used directly to authenticate oneself to another SIG member or to access content of a SIG member. That is why for the SIG membership credentials, the reactive approach for revocation may be more suitable since such credentials can be revoked immediately after determination of abuse.

Another part concerns the operation of the credentials granted to SIG members inside an OSN during communication between SIG members. If a SIG member eventually wants to add another alleged SIG member to his list of friends through the standard OSN invitation process, or to exchange content or to chat in a secure way, mutual authentication of the two SIG members and encryption of the content for fellow SIG members may be performed by means of granted credentials. Since the SIGs are by definition secret or privacy sensitive, the invitation process is crucial because a legitimate member (the inviter, the invitee or both) does not yet know whom he is interacting with. In some embodiments, the authentication problem may be solved by secret handshakes. Secret handshakes are known as mechanisms designed to prove group membership between fellow group members. Also non-members may not be able to either impersonate group members or to recognize legitimate group members. Besides, the communications between group members may be designed so as to ensure untraceability of any two protocol exchanges. The purpose of these protocols is to model real handshakes between group members in cryptography. Upon handshake between two SIG members, due to the nature of SIGs, users may be reluctant to disclose their affiliation to the SIG even when interacting with another legitimate SIG member. In some embodiments, Oblivious Signature-Based Envelopes (OSBEs) are used to allow two users of an OSN, owning a credential to perform a secret handshake and share a key if they both own the signature of the same message under the same public key.

Let $p$ and $q$ be large prime numbers such that $q$ divides $p - 1$; $g$ is a generator of the subgroup of order q of $Z_p$; and $h$ is a one way hash function in the range $\{1,...,q-1\}$. Secret sharing allows a set of $n$ parties to possess shares of a secret value, such that any $t$ shares can be used to reconstruct the secret, but any $t$-1 shares provide no information about the secret. This approach may be used either for "Share", which means $n$ users to share a random secret without a dealer, so that $t$ are in principle able to reconstruct the secret, or for "Redistribute", which means $t$ shareholders to compute $n'$ new, unrelated shares of the same secret, so that $t'$ new shareholders can reconstruct the secret. In both algorithms the secret is actually never reconstructed, and - since there is no dealer - none of the shareholders knows the secret.

$$\Gamma_{\mathcal{P}}^{(n,t)}$$

is an access structure, wherein a secret is shared among a population of users in the set $\mathcal{P}$, , with $|\mathcal{P}|=n$, so that any subset

$$\mathcal{B} \in \Gamma_{\mathcal{P}}^{(n,t)}$$

with $|\mathcal{B}| = t$ can reconstruct the secret.

**Share:** this algorithm is executed by each $p_i$ belonging to an authorized set

$$\mathcal{B} \in \Gamma_{\mathcal{P}}^{(n,t)}$$

with cardinality $t$. Each $P_i$ picks a random $r_i \xleftarrow{R} \mathbb{Z}_q$, forms a random polynomial $f_i(u) = r_i + a_{u.1}u + \cdots + a_{i.t-1}u^{t-1}$ and

sends $f_i(j)$ mod $q$ to each $P_j \in \mathcal{P}/P_i$; the (unknown) shared secret is $R = \Sigma_{j\in\mathcal{P}} r_j$. Every $P_i \in \mathcal{P}$ computes its share of the secret $R_i = \Sigma_{j\in\mathcal{B}} f_j(i)$; additionally, each $P_i$ broadcasts $g^{r_i}$ mod $p$; this way, everybody can compute $g^R$ mod $p$;

**Redistribute**: this algorithm is executed by each $P_i$ belonging to an authorized set

$$\mathcal{B} \in \Gamma_{\mathcal{P}}^{(n,t)}$$

with cardinality $t$. The objective is to generate new shares for the new access structure

$$\Gamma_{\mathcal{P}'}^{(n',t')}.$$

Each $P_i$ computes a random polynomial formed as

$$f_i(u) = R_i + a_{i,1}u + \cdots + a_{i,t'-1}u^{t'-1},$$

where $R_i$ is the local share of the secret possessed by $P_i$; each $P_i$ sends $f_i(j)$ mod $q$ to each $P_j \in \mathcal{P}'/P_i$; then, each $P_i$ can locally generate its new share $R_i'$ by Lagrange interpolation;

Using these two algorithms, threshold signatures may be generated. A variant of the Digital Signature Standard (DSS) scheme follows. Let the secret signing key be $x \in Z_q$ and the public key be $g^x$ mod $p$. The scheme has two algorithms:

**Sign:** given the message $m$ and a random number $e \xleftarrow{R} \mathbb{Z}_q$, compute the signature $(w,v)$ such that $w = (g^e$ mod $p)$ mod $q$ and $v = wx + h(m)e$ mod $q$;

**Verify:** $(w,v)$ is a valid signature on the message m if

$$w = \left(g^{vh(m)^{-1}}(g^x)^{-wh(m)^{-1}} \bmod p\right) \bmod q;$$

A threshold signature scheme leverages on the aforementioned secret sharing techniques in order to share the secret key among $n$ parties, thus distributing the signing capabilities over $n$ parties, so that any subset of $t$ can jointly compute a signature, whereas no $t$—1 can. A threshold version of the aforementioned DSS signature variant follows. The variant assumes that the "Share" algorithm has been executed to create an access structure

$$\Gamma_{\mathcal{P}}^{(n,t)}$$

and that any principal in $\mathcal{P}$ has a share $x_i$ of the unknown private key $x$. In addition, the public key $g^x$ is publicly known. The "Verify" algorithm remains the same, whereas the "Sign" algorithm becomes:

    **Sign:** this algorithm is executed by each $P_i$ belonging to an authorized set

$$\mathcal{B} \in \Gamma_{\mathcal{P}}^{(n,t)}$$

with cardinality $t$; each $P_i$ has a local share $x_i$ of the secret signing key $x$. All the $P_i$ engage in the *Share* algorithm, generating the value $g^e$ mod q and a local share $e_i$ of the (unknown) random value e; then, each $P_i$ sends the value $v_i = g^e xi + h(m)e_i$ mod $q$ to the requester of the signature along with the value $g^e$ mod $q$; the first part of the signature is $w = g^e$ mod $q$; given the set of shares

$$\{v_i, i \in \mathcal{B}\},$$

the second part of the signature $v$ can be computed through Lagrange interpolation.

The Share algorithm is executed twice, once prior to signing to generate the public key and shares of the private key, and a second time to generate the first part of the signature and shares of its discrete log.

An OSBE scheme allows two parties to share a key if a predefined party among the two possesses a signature on an agreed-upon message. At first, a message $m$ is chosen; the OSBE round happens between a party P1, who might have a signature $(w,v)$ on $m$ and P2. The OSBE round proceeds as follows:

OSBERound: P1 sends $w$ to P2; P2 generates $r \xleftarrow{R} \mathbb{Z}_{q}$, sends $g^r$ to P1 and computes $K_2 = ((g^x)^w w^{h(m)})^r$; P1 computes $K_1 = (g^r)^v$; $K_1 = K_2$, i.e. P1 and P2 will share a key if P1's signature on $m$ was correct.

Below a SIG members handshake and relative challenge-response protocol that occur upon friendship invitation is presented:

$$U_1 \rightarrow U_2 \quad w_1 = g^{s^1}, g^{r^1}$$

$$U_2 \rightarrow U_1 \quad g^{r^2}, w_2 = g^{s^2}$$

$U_1$

computes $K_1 = \left( (g^x)^{w_2} w_2^{h(M_{SIG})} \right)^{r_1}$

$K_1' = (g^{r_2})^{v_2}$ and $k_1 = H(K_1 \parallel K_1')$

$U_2$

computes $K_2' = \left( (g^x)^{w_1} w_1^{h(M_{SIG})} \right)^{r_2}$

$K_2 = \left( g^{r^1} \right)^{v_2}$ and $k_2 = H(K_2 \parallel K_2')$

$$U_2 \rightarrow U_1 \quad E_{k_2}(N)$$

$$U_1 \rightarrow U_2 \quad E_{k_1}(N+1)$$

The SIG members handshake presented above is an algorithm that may be executed by two SIG members that want to authenticate one another as members of a SIG. The two members engage in two separate instances of the OSBE round algorithm, acting in turn as both P1 and P2 over the two executions, at the end of which, each party obtains two keys. Thus the two users, $U_1$ holding the signature $(w_1,v_1)$ and $U_2$ holding the signature $(w_2,v_2)$ engage in the OSBE round sessions establishing two keys each. The two parties then have to prove to one another the knowledge of both keys simultaneously. They engage in a challenge-response protocol to prove to one another knowledge of the keys computed. Thus $U_1$, upon receiving the last message is already able to tell whether interaction is with a legitimate SIG member.

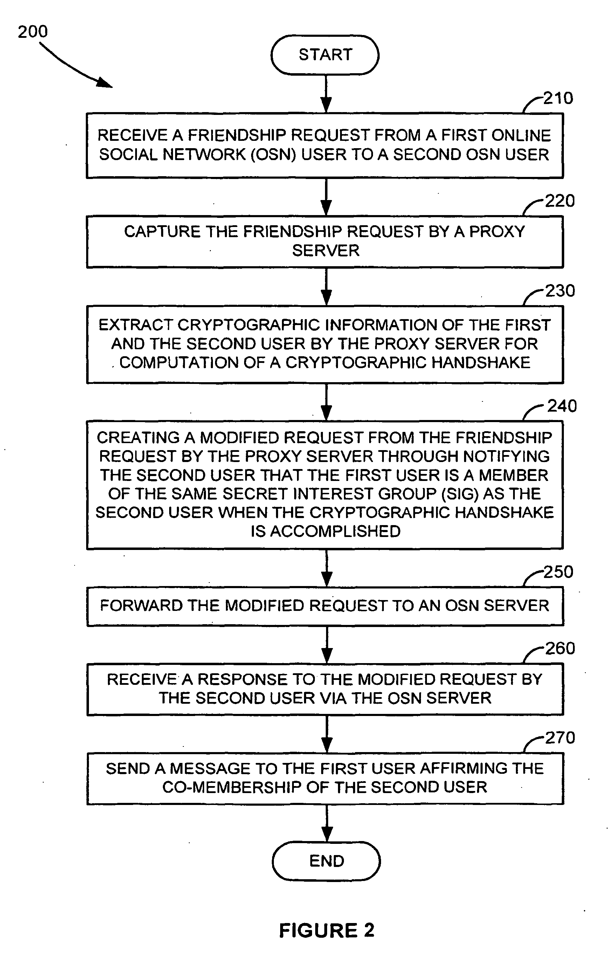

Figure 2 is a flow diagram 200 describing a method for verification of personalities in OSNs. The method starts at block 210 with receiving a friendship request from a first OSN user to a second OSN user. A proxy server captures the friendship request at block 220. The friendship request consists of information about both the inviter and the invitee. Thus, in block 230, the proxy server extracts cryptographic information for the first and the second OSN users in order to try to compute a cryptographic handshake, which would verify the membership of both the first and the second user to a same Secret Interest Group (SIG). In some embodiments, the cryptographic information is extracted from an "about me" section of the users in their OSN profiles. The cryptographic information may be held as a string that has no other use except for accomplishing secret cryptographic handshakes. It is expected that the cryptographic information cannot be self-generated. In some embodiments, the cryptographic information of the users is issued by a central entity as a credential for a specific SIG membership. In yet another embodiment, the credential is a signature and oblivious signature based envelopes are used for performing the cryptographic handshake. In some embodiments, a cooperation of a minimum number of entitled users is necessary in order to act as a central entity for issuing the credentials. The operation of issuing credentials in a distributed fashion instead of by a sole entity with authority minimizes the risk of an improper grant of membership, hence an improper grant of a credential.

In some embodiments, the central entity issues a credential after checking the member's compliance with a secret interest group joining policy. In some embodiments the credentials are not issued for lifetime, but a credential revocation is set. In some embodiments, the revocation is set by embedding a time-limit in the credential itself. In another embodiment, the credentials are revoked by publishing a revocation handle to an authenticated public list.

Turning back to Figure 2, at block 240 the proxy server creates a modified request from the friendship request by adding a notification, that the first user is a member of the same SIG as the second user, when the cryptographic handshake is accomplished. Then, at block 250, the modified request is forwarded to an OSN server to reach the invitee. Next, at block 260, a response to the modified request is received by the second user via the OSN server. Finally, at block 270, a confirmation message is sent to the first user affirming the co-membership of the second user when the second user has accepted the modified request.

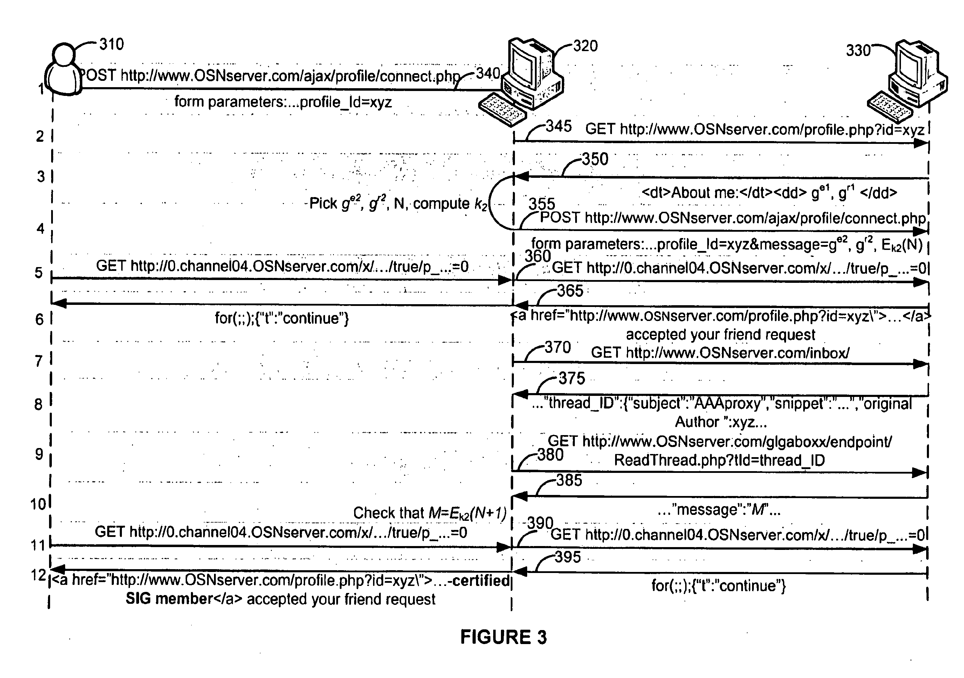

Figure 3 illustrates the operation of a proxy upon a friendship request in an exemplary OSN. There are three participants in this kind of communication - the inviter 310 sending the friendship request, the proxy server 320, and the OSN server 330. The communication between these participants is performed by messages. A friendship request 340 is triggered by the inviter 310. The request is for adding a new friend. It is sent through the browser of the inviter 310. The Uniform Resource Locator (URL) is "*http://www.OSNserver.com/ajax/profile/connect.php*" and the relevant parameters are "*profile_id=xyz*". This message is not forwarded immediately to the receiver i.e. the OSN server 330. Instead, the proxy server 320 looks up the profile of the invitee "*profile_id*" and extracts the invitee part of a cryptographic handshake. The proxy server 320 looks up the profile of the invitee by means of "*GET http://www.OSNserver.com/ajax/profile.php?id=xyz*" (message 345), wherein the receiver is the OSN server 330, and extracts cryptographic information gathered in the 'about me' section of the invitee "*<dt>About me: <ldt> <dd> $g^{e1}$ $g^{r1}$ </dd>*" (message 350) for cryptographic handshake. The proxy server 320 derives the key which is used to encrypt a random nonce N: "pick $g^{e2}$, $g^{r2}$ N, compute $K_2$", and then creates its own message 355 "*POST http:llwww.OSNserver.comlajaxlprofilelconnect.php*" to the OSN server 330 with form parameters "*profile_id=xyz&message=$g^{e2}$, $g^{r2}$, $E_{k2}$(N)*" containing the handshake message and encrypted nonce. If the invitee accepts the friendship request, the inviter 310 is notified in a number of ways, depending on whether the inviter 310 is online or not at the moment of the acceptance. The proxy server 320 intercepts this event in all its possible forms depending on the type of the response. For example, in messages 360 and 365, the browser is notified through an infinite javascript loop, that originates AJAX requests to fetch the updates. Message 360:

"*GET http://0.channe104.0SNserver.com/x/.../true/p_...=0*" is transferred from the inviter 310 to the OSN server 330 through the proxy server 320. The response 365 contains in its payload the string "*<a href= http://www.OSNserver.com/profile.php?id=xyz\" >...<la> accepted your friend request*" serving as the status update fetched by the aforementioned infinite loop. The message confirmation is not sent back directly to the browser, but the proxy server 320 searches in the inviter's OSN inbox for a message from the invitee with response to the friendship request (messages 370, 375, 380, and 385). First, message 370: "*GET http://www.OSNserver.com/inboxl*" is for searching the inviter's inbox; then a message 375 containing the list of messages in the inviter 310's inbox is sent back from the OSN server 330 back to the proxy server 320. If the invitee is also running an instance of the proxy 320, then the message will contain "*thread_ID":{"subject":"AAAproxy", "snippet": "... ", "originalAuthor":xyz...*". By the following message 380:

"*GET http://www.OSNserver.com/gigaboxx/endpoint/ReadThread.php?tid=thread_ID*" the proxy server 320 fetches the message marked with the thread_ID specified in the response message 375, associated to the code "AAAproxy". The response message 385 containing a message: "... *"message":* "*M*"... "; the proxy server 320 checks whether $M=E_{k2}(N+1)$. If the check fails, the standard acceptance of message 365 is forwarded back to the inviter 310. Otherwise, a modified confirmation message that highlights the membership of the invitee to the same SIG as the inviter, for example message 395 containing "*<a href="http://www.OSNserver.com/profile.php?id=xyz\" >... - **certified SIG member**</a> accepted your friend request",* is sent to the browser of the inviter 310 as a response for the update message 390: *"GET http:ll0.channel04.OSNserver.com/xl...ltruelp_...=0".*

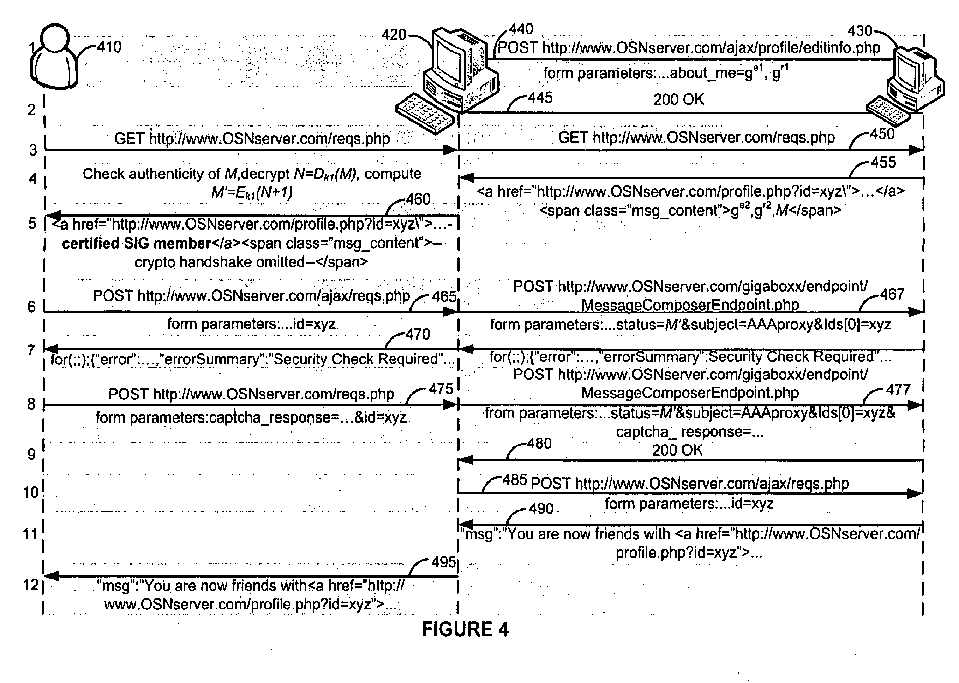

Figure 4 illustrates the operation of a proxy upon a friendship response in an exemplary OSN. There are three participants in this kind of communication: the invitee 410 receiving the friendship request, the proxy server 420, and the OSN server 430. The communication between these participants is performed by messages. At first, the proxy server 420 publishes the invitee's cryptographic information in the "About me" section of the invitee's profile (messages 440 and 445). Message 440: "*POST http://www.OSNserver.com/ajax/profile/editinfo.php*" with form parameters *"...about_me= $g^{e1},9^{r1}$"* containing the cryptographic information is sent by the proxy server 420 to the OSN server 430. The confirmation response by the OSN server 430 is message 445: *"200 OK".* The operation begins with the invitee 410 visiting a page with a pending friendship request (message 450). This visit is performed through the browser of the invitee 410 by message 450:

*"GET http://www.OSNserver.com/reqs.php".* The message 450 is sent to the OSN server 430 via the proxy 420. The page is fetched as shown by message 455: the string "*<a href= "http:llwww.OSNserver.com/profile.php?id=xyz">...</a> <span class="msg_content"> $g^e2$, $g^r2$, M</span>*" is contained in the message coming from the OSN server 430 to the proxy server 420 and then the message that the inviter has included in the invitation is decoded by *"check authenticity of M, decrypt $N = D_{k1}(M)$, compute $M' = E_{k1}(N+1)$",* which is attempting to accomplish the cryptographic handshake and generate the handshake message M' to be sent to the inviter. In case of successful handshake, the inviter is proved to be a SIG member. In this case, the html message 460: "*<a href= "http://www.OSNserver.com/profile.php?id=xyz\" >... - **certified SIG member**</a> <span class = "msg_content">--crypto handshake omitted--</span>"* that is sent to the invitee 410, is a modified message, so as to notify, that the inviter is a SIG member. If the invitee 410 decides to accept the friendship request, the acceptance message (message 465 containing form parameters *"...id=xyz",* the id of the inviter) is not forwarded right away. Message 465 is not forwarded right away; instead the modified by the proxy 420 sends message 467 *"POST http:llwww.OSNserver.comlgigaboxx/endpoint/MessageComposerEndpoint.php*" with form parameters "*... status=M'&subject=AAAproxy&ids[0]=xyz*" that the OSN server receives; M' is the aforementioned message M'. If the considered OSN uses captcha to prevent automated actions by proxy servers, the OSN server 430 sends captcha request 470 containing "*for (;; ); ("error": ..., "errorSummary"*': "*Security Check Required*"...";* the captcha challenge cannot be solved by the proxy server 420 and hence the proxy server transfers the captcha challenge 470 directly to the invitee 410 to have it solved. Then the proxy server 420 receives message 475: *"POST http:llwww.OSNserver.comlreqs.php"* with form parameters *"captcha_response=... &id=xyz"* with the solution to the captcha from the invitee 410 and sends a modified response 477:
"*POST http:llwww.OSNserver.com/gigaboxx/endpoint/MessageComposerEndpoint.php*" *with form parameters "...status=M'&subject=AAAproxy&ids[0] =xyz"* to the OSN server. Then after receiving the confirmation of the security check from the OSN server 430 by means of message 480: *"200 OK",* the proxy server 420 is able to accept the original friendship request and forwards the response of the OSN server 430 back to the invitee 410 (messages 485, 490, and 495). Message 485: "*POST http://www.OSNserver.com/ajax/reqs.php"* with form parameters "*... id=xyz*" is sent by the proxy server 420 to the OSN server 430 to finally notify to the OSN server 430 that the invitee 410 has accepted the friendship request; this is the actual forwarding of message 465 that had previously been delayed by the proxy server 420. The response 490: "*"msg": "You are now friends with <a href= "http://www.OSNserver.com/profile.php?id=xyz" >...",* that is confirmation for the friendship, is received by the proxy server 420 from the OSN server 430 and then transferred to the invitee 410 as message 495 identical to message 490.

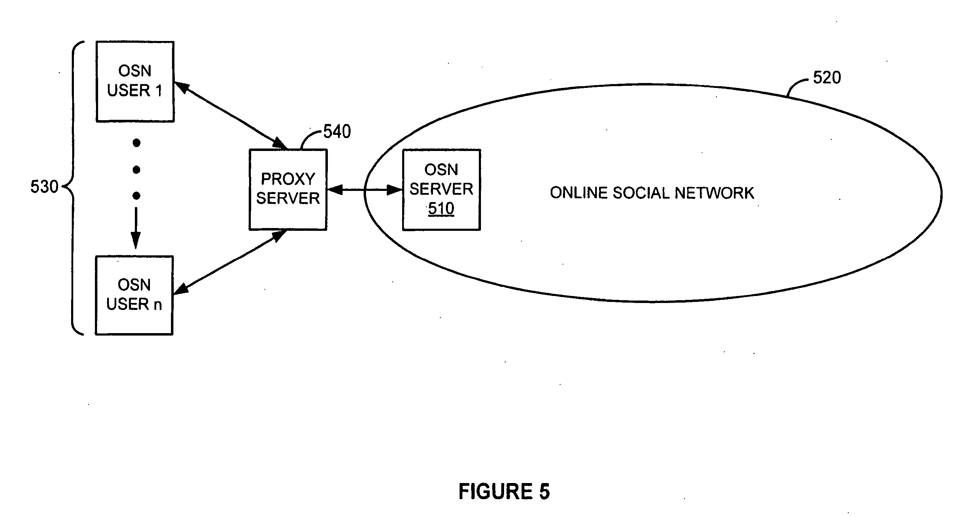

Figure 5 represents a block diagram with an exemplary illustration of a system for creating SIGs in OSNs. A proxy server 540 serves as a mediator between the communication of users 530 requesting friendship and the OSN server 510. The OSN server 510 is part of the OSN 520. The intended use is the following: a SIG member runs the proxy server 540, which intercepts only requests towards the specific OSN server 510. The proxy server 540 modifies requests and responses, running cryptographic handshake upon membership invitation and chat events; notification of success or failure of the cryptographic handshake is provided to the user through modifications of the HTML that is displayed in the browser. In some embodiments, the proxy server 540 is a java http proxy server.

Some embodiments of the invention may include the above-described methods being written as one or more software components. These components, and the functionality associated with each, may be used by client, server, distributed, or peer computer systems. These components may be written in a computer language corresponding to one or more programming languages such as, functional, declarative, procedural, object-oriented, lower level languages and the like. They may be linked to other components via various application programming interfaces and then compiled into one complete application for a server or a client. Alternatively, the components maybe implemented in server and client applications. Further, these components may be linked together via various distributed programming protocols. Some example embodiments of the invention may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.

The above-illustrated software components are tangibly stored on a computer readable medium as instructions. The term"computer readable medium" should be taken to include a single medium or multiple media that stores one or more sets of instructions. The term "computer readable medium" should be taken to include any physical article that is capable of undergoing a set of physical changes to physically store, encode, or otherwise carry a set of instructions for execution by a computer system which causes the computer system to perform any of the methods or process steps described, represented, or illustrated herein. Examples of computer-readable media include, but are not limited to: magnetic media, such as hard disks, floppy disks, and magnetic tape; optical media such as CD-ROMs, DVDs and holographic devices; magneto-optical media; and hardware devices that are specially configured to store and execute, such as application-specific integrated circuits ("ASICs"), programmable logic devices ("PLDs") and ROM and RAM devices. Examples of computer readable instructions include machine code, such as produced by a compiler, and files containing higher-level code that are executed by a computer using an interpreter. For example, an embodiment of the invention may be implemented using Java, C++, or other object-oriented programming language and development tools. Another embodiment of the invention may be implemented in hard-wired circuitry in place of, or in combination with machine readable software instructions.

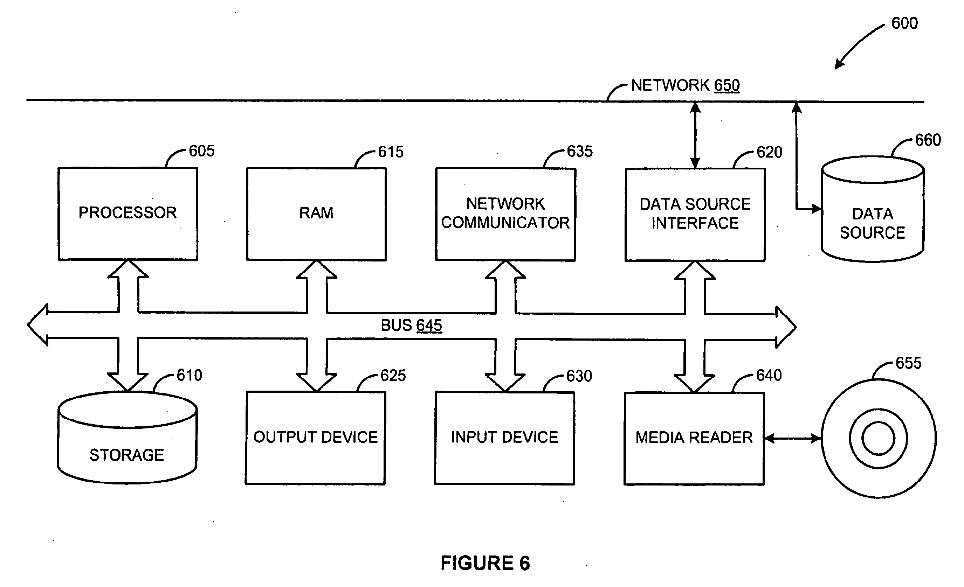

Figure 6 is a block diagram of an exemplary computer system 600. The computer system 600 includes a processor 605 that executes software instructions or code stored on a computer readable medium 655 to perform the above-illustrated methods of the invention. The computer system 600 includes a media reader 640 to read the instructions from the computer readable medium 655 and store the instructions in storage 610 or in random access memory (RAM) 615. The storage 610 provides a large space for keeping static data where at least some instructions could be stored for later execution. The stored instructions may be further compiled to generate other representations of the instructions and dynamically stored in the RAM 615. The processor 605 reads instructions from the RAM 615 and performs actions as instructed. According to one embodiment of the invention, the computer system 600 further includes an output device 625 (e.g., a display) to provide at least some of the results of the execution as output including, but not limited to, visual information to users and an input device 630 to provide a user or another device with means for entering data and/or otherwise interact with the computer system 600. Each of these output devices 625 and input devices 630 could be joined by one or more additional peripherals to further expand the capabilities of the computer system 600. A network communicator 635 may be provided to connect the computer system 600 to a network 650 and in turn to other devices connected to the network 650 including other clients, servers, data stores, and interfaces, for instance. The modules of the computer system 600 are interconnected via a bus 645. Computer system 600 includes a data source interface 620 to access data source 660. The data source 660 can be access via one or more abstraction layers implemented in hardware or software. For example, the data source 660 may be accessed through network 650. In some embodiments the data source 660 may be accessed via an abstraction layer, such as, a semantic layer.

A data source is an information resource. Data sources include sources of data that enable data storage and retrieval. Data sources may include databases, such as, relational, transactional, hierarchical, multi-dimensional (e.g., OLAP), object oriented databases, and the like. Further data sources include tabular data (e.g., spreadsheets, delimited text files), data tagged with a markup language (e.g., XML data), transactional data, unstructured data (e.g., text files, screen scrapings), hierarchical data (e.g., data in a file system, XML data), files, a plurality of reports, and any other data source accessible through an established protocol, such as, Open DataBase Connectivity (ODBC), produced by an underlying software system (e.g., ERP system), and the like. Data sources may also include a data source where the data is not tangibly stored or otherwise ephemeral such as data streams, broadcast data, and the like. These data sources can include associated data foundations, semantic layers, management systems, security systems and so on.

The above descriptions and illustrations of embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize. These modifications can be made to the invention in light of the above detailed description. Rather, the scope of the invention is to be determined by the following claims, which are to be interpreted in accordance with established doctrines of claim construction.

**Claims**

1. A computer readable medium comprising computer readable instructions, which, when executed by a computer in a proxy server (320; 420), cause the computer to perform a method (200), the method comprising:

   receiving (210) a friendship request (450) from a first online social network OSN user (310) to a second OSN user (410);
   capturing (220) the friendship request (450);
   extracting (230) cryptographic information of the first user (310) and of the second user (420) to be used for computation of a cryptographic handshake to verify the membership of the first and the second user in a same secret interest group SIG, wherein the cryptographic information of the first user (310) and of the second user (410) is extracted from an "about me" section of the users in their OSN profiles;
   creating (240) a modified request (460) from the friendship request (450) by adding a notification that the first user (310) is a member of the same SIG as the second user (410) when the computation of the cryptographic handshake is accomplished;
   forwarding (250) the modified request (460) to an OSN server (330; 430);
   receiving (260) a response (485) to the modified request (460) to the second user (410) via the OSN server (330; 430); and
   sending (270) a message (395) to the first user (310) affirming the co-membership of the second user (410) when the second user (410) has accepted the modified request (460).

2. The medium of claim 1, wherein the cryptographic information of the first (310) and the second (410) user is a credential issued by a central entity.

3. The medium of claim 2, wherein the credential is a signature and the cryptographic handshake is performed by using oblivious signature based envelopes and/or
   wherein the central entity comprises a minimum number of entitled users acting in cooperation and/or
   wherein the credential is issued by the central entity after verifying the member's compliance with the secret interest group's joining policy.

4. The medium of claim 2 or 3, wherein a revocation is set for the credential.

5. A computer implemented method (200) for verification of personalities in online social networks (130), the method (200) being performed at a proxy server (320; 420) and comprising:

   receiving (210) a friendship request (450) from a first online social network OSN (310) user to a second OSN user (410);
   capturing (220) the friendship request (450);
   extracting (230) cryptographic information of the first user (310) and of the second user (410) to be used for computation of a cryptographic handshake to verify the membership of the first (310) and the second (410) user in a same secret interest group SIG, wherein the cryptographic information of the first user (310) and of the second user (410) is extracted from an "about me" section of the users in their OSN profiles;
   creating (240) a modified request (460) from the friendship request (450) by adding a notification that the first user (310) is a member of the same SIG as the second user (410) when the computation of the cryptographic handshake is accomplished;
   forwarding (250) the modified request (460) to an OSN server (330; 430);
   receiving (260) a response to the modified request (460) to the second user (410) via the OSN server (330; 430); and
   sending (270) a message to the first user (310) affirming the co-membership of the second user (410) when the second user (410) has accepted the modified request (460).

6. The method of claim 5, wherein the cryptographic information of the first (310) and the second (410) user is a credential issued by a central entity.

7. The method of claim 6, wherein the credential is a signature and the cryptographic handshake is performed by using oblivious signature based envelopes.

8. The method of claim 6 or 7, wherein the central entity comprises a minimum number of entitled users acting in cooperation and/or
wherein the central entity issues the credential after verifying the member's compliance with the secret interest group's join policy.

9. The method of claim 6, 7 or 8, wherein a revocation is set for the credential.

10. A computer system for verification of personalities in online social networks OSNs, comprising:

   one or more OSN servers (330; 430) within an OSN (130);
   at least two OSN users (310; 410) communicating via the OSN (130);
   a proxy server (320; 420) in communication with the one or more OSN servers (330; 430), the proxy server (320; 420) having a processor in communication with a memory comprising instructions to be executed by the processor for
   receiving (210) a friendship request (450) from a first online social network OSN (310) user to a second OSN user (410);
   capturing (220) the friendship request (450);
   extracting (230) cryptographic information of the first user (310) and of the second user (410) to be used for computation of a cryptographic handshake to verify the membership of the first (310) and the second (410) user in a same secret interest group SIG, wherein the cryptographic information of the first user (310) and of the second user (410) is extracted from an "about me" section of the users in their OSN profiles;
   creating (240) a modified request (460) from the friendship request (450) by adding a notification that the first user (310) is a member of the same SIG as the second user (410) when the computation of the cryptographic handshake is accomplished;
   forwarding (250) the modified request (460) to an OSN server (330; 430);
   receiving (260) a response to the modified request (460) to the second user (410) via the OSN server (330; 430); and
   sending (270) a message to the first user (310) affirming the co-membership of the second user (410) when the second user (410) has accepted the modified request (460).

11. The system of claim 10, wherein the cryptographic information is a credential for a specific SIG membership issued by a central entity.

12. The system of claim 10 or 11, wherein the credential is a signature and the cryptographic handshake is performed by using oblivious signature based envelopes and/or wherein a revocation is set for the credential and/or wherein the proxy server (320; 420) is a java http proxy server.


**Patentansprüche**

1. Computerlesbares Medium, umfassend computerlesbare Instruktionen, die, wenn von einem Computer in einem Proxy-Server (320; 420) ausgeführt, den Computer veranlassen, ein Verfahren (200) auszuführen, wobei das Verfahren umfasst:

   Empfangen (210) einer Freundschaftsanfrage (450) von einem ersten Benutzer (310) eines sozialen Online-Netzwerks OSN bzw. einem ersten OSN-Benutzer (310) an einen zweiten OSN-Benutzer (410);
   Erfassen (220) der Freundschaftsanfrage (450);
   Extrahieren (230) von krypthographischen bzw. verschlüsselten Informationen des ersten Benutzers (310) und des zweiten Benutzers (420) zur Verwendung zur Berechnung eines krypthographischen bzw. verschlüsselten Handschlags bzw. Handshakes, um die Mitgliedschaft des ersten und des zweiten Benutzers in einer gleichen geheimen Interessengruppe SIG zu verifizieren, wobei die krypthographischen bzw. verschlüsselten Informationen des ersten Benutzers (310) und des zweiten Benutzers (410) aus einem "Über mich"-Abschnitt bzw. -Sektion der Benutzer in ihren OSN-Profilen extrahiert werden;

Erzeugen (240) einer modifizierten Anfrage (460) aus der Freundschaftsanfrage (450) durch Hinzufügen einer Benachrichtigung, dass der erste Benutzer (310) ein Mittglied der gleichen SIG ist wie der zweite Benutzer (410), wenn die Berechnung des krypthographischen bzw. verschlüsselten Handschlags bzw. Handshakes vollendet bzw. ausgeführt wird;

Weiterleiten (250) der modifizierten Anfrage (460) an einen OSN-Server (330; 430);

Empfangen (260) einer Antwort (485) auf die modifizierte Anfrage (460) an den zweiten Benutzer (410) über den OSN-Server (330; 430); und

Senden (270) einer Nachricht (395) an den ersten Benutzer (310), welche die Co-Mitgliedschaft des zweiten Benutzers (410) bestätigt, wenn der zweite Benutzer (410) die modifizierte Anfrage (460) angenommen hat.

2. Medium nach Anspruch 1, wobei die verschlüsselten Informationen des ersten (310) und des zweiten (410) Benutzers ein Berechtigungsnachweis bzw. Credential sind, der von einer zentralen Entität bzw. Einheit ausgegeben wird.

3. Medium nach Anspruch 2, wobei der Berechtigungsnachweis eine Signatur ist und der verschlüsselte Handschlag unter Verwendung von nicht wahrnehmbaren signaturbasierten Umschlägen durchgeführt wird und/oder
wobei die zentrale Entität eine Mindestzahl berechtigter Benutzer umfasst, die Kooperation wirken bzw. agieren, und/oder
wobei der Berechtigungsnachweis von der zentralen Entität ausgegeben wird, nachdem verifizierte wurde, dass das Mitglied die Beitrittsbestimmungen der geheimen Interessengruppe erfüllt.

4. Medium nach Anspruch 2 oder 3, wobei ein Rückruf für den Berechtigungsnachweis eingestellt ist.

5. Computerimplementiertes Verfahren (200) zur Verifizierung von Persönlichkeiten bzw. Personen in sozialen Online-Netzwerken (130), wobei das Verfahren (200) an einem Proxy-Server (320; 420) ausgeführt wird und umfasst:

Empfangen (210) einer Freundschaftsanfrage (450) von einem ersten Benutzer (310) eines sozialen Online-Netzwerks OSN bzw. einem ersten OSN-Benutzer (310) an einen zweiten OSN-Benutzer (410);
Erfassen (220) der Freundschaftsanfrage (450);
Extrahieren (230) von krypthographischen bzw. verschlüsselten Informationen des ersten Benutzers (310) und des zweiten Benutzers (410) zur Verwendung zur Berechnung eines krypthographischen bzw. verschlüsselten Handschlags bzw. Handshakes, um die Mitgliedschaft des ersten (310) und des zweiten (410) Benutzers in einer gleichen geheimen Interessengruppe SIG zu verifizieren, wobei die krypthographischen bzw. verschlüsselten Informationen des ersten Benutzers (310) und des zweiten Benutzers (410) aus einem "Über mich"-Abschnitt bzw. -Sektion der Benutzer in ihren OSN-Profilen extrahiert werden;
Erzeugen (240) einer modifizierten Anfrage (460) aus der Freundschaftsanfrage (450) durch Hinzufügen einer Benachrichtigung, dass der erste Benutzer (310) ein Mittglied der gleichen SIG ist wie der zweite Benutzer (410), wenn die Berechnung des krypthographischen bzw. verschlüsselten Handschlags bzw. Handshakes vollendet bzw. ausgeführt wird;
Weiterleiten (250) der modifizierten Anfrage (460) an einen OSN-Server (330; 430);
Empfangen (260) einer Antwort auf die modifizierte Anfrage (460) an den zweiten Benutzer (410) über den OSN-Server (330; 430); und
Senden (270) einer Nachricht an den ersten Benutzer (310), welche die Co-Mitgliedschaft des zweiten Benutzers (410) bestätigt, wenn der zweite Benutzer (410) die modifizierte Anfrage (460) angenommen hat.

6. Verfahren nach Anspruch 5, wobei die verschlüsselten Informationen des ersten (310) und des zweiten (410) Benutzers ein Berechtigungsnachweis bzw. Credential sind, der von einer zentralen Entität bzw. Einheit ausgegeben wird.

7. Verfahren nach Anspruch 6, wobei der Berechtigungsnachweis eine Signatur ist und der verschlüsselte Handschlag unter Verwendung von nicht wahrnehmbaren signaturbasierten Umschlägen durchgeführt wird.

8. Verfahren nach Anspruch 6 oder 7, wobei die zentrale Entität eine Mindestzahl berechtigter Benutzer umfasst, die Kooperation wirken bzw. agieren, und/oder
wobei die zentrale Entität den Berechtigungsnachweis ausgibt, nachdem verifizierte wurde, dass das Mitglied die Beitrittsbestimmungen der geheimen Interessengruppe erfüllt.

9. Verfahren nach Anspruch 6, 7 oder 8, wobei ein Rückruf für den Berechtigungsnachweis eingestellt wird.

**10.** Computersystem zur Verifizierung von Persönlichkeiten bzw. Personen in sozialen Online-Netzwerken OSN, umfassend:

einen oder mehrere OSN-Server (330; 430) innerhalb eines OSN (130);
zumindest zwei OSN-Benutzer (310; 410), die über das OSN (130) kommunizieren;
einen Proxy-Server (320; 420) in Kommunikation mit dem einen oder den mehreren OSN-Servern (30; 430), wobei der Proxy-Server (320; 420) einen Prozessor in Kommunikation mit einem Speicher aufweist, der Instruktionen umfasst, die von dem Prozessor auszuführen sind zum
Empfangen (210) einer Freundschaftsanfrage (450) von einem ersten Benutzer (310) eines sozialen Online-Netzwerks OSN bzw. einem ersten OSN-Benutzer (310) an einen zweiten OSN-Benutzer (410);
Erfassen (220) der Freundschaftsanfrage (450);
Extrahieren (230) von krypthographischen bzw. verschlüsselten Informationen des ersten Benutzers (310) und des zweiten Benutzers (410) zur Verwendung zur Berechnung eines krypthographischen bzw. verschlüsselten Handschlags bzw. Handshakes, um die Mitgliedschaft des ersten (310) und des zweiten (410) Benutzers in einer gleichen geheimen Interessengruppe SIG zu verifizieren, wobei die krypthographischen bzw. verschlüsselten Informationen des ersten Benutzers (310) und des zweiten Benutzers (410) aus einem "Über mich"-Abschnitt bzw. -Sektion der Benutzer in ihren OSN-Profilen extrahiert werden;
Erzeugen (240) einer modifizierten Anfrage (460) aus der Freundschaftsanfrage (450) durch Hinzufügen einer Benachrichtigung, dass der erste Benutzer (310) ein Mittglied der gleichen SIG ist wie der zweite Benutzer (410), wenn die Berechnung des krypthographischen bzw. verschlüsselten Handschlags bzw. Handshakes vollendet bzw. ausgeführt wird;
Weiterleiten (250) der modifizierten Anfrage (460) an einen OSN-Server (330; 430);
Empfangen (260) einer Antwort auf die modifizierte Anfrage (460) an den zweiten Benutzer (410) über den OSN-Server (330; 430); und
Senden (270) einer Nachricht an den ersten Benutzer (310), welche die Co-Mitgliedschaft des zweiten Benutzers (410) bestätigt, wenn der zweite Benutzer (410) die modifizierte Anfrage (460) angenommen hat.

**11.** System nach Anspruch 10, wobei die verschlüsselten Informationen ein Berechtigungsnachweis bzw. Credential für eine spezifische SIG-Mitgliedschaft sind, der von einer zentralen Entität bzw. Einheit ausgegeben wird.

**12.** System nach Anspruch 10 oder 11, wobei der Berechtigungsnachweis eine Signatur ist und der verschlüsselte Handschlag unter Verwendung von nicht wahrnehmbaren signaturbasierten Umschlägen durchgeführt wird und/oder wobei ein Rückruf für den Berechtigungsnachweis eingestellt ist und/oder wobei der Proxy-Server (320; 420) ein Java http Proxy-Server ist.

**Revendications**

**1.** Support lisible par ordinateur comprenant des instructions lisibles par ordinateur qui, lors de leur exécution par un ordinateur dans un serveur mandataire (320 ; 420), poussent l'ordinateur à réaliser un procédé (200), le procédé comprenant :

la réception (210) d'une demande d'amitié (450) d'un premier utilisateur de réseau social en ligne OSN (310) à un second utilisateur d'OSN (410) ;
la capture (220) de la demande d'amitié (450) ;
l'extraction (230) d'informations cryptographiques du premier utilisateur (310) et du second utilisateur (420) devant être utilisées pour le calcul d'un établissement de liaison cryptographique pour vérifier la qualité de membre du premier et du second utilisateurs dans un même groupe d'intérêt secret SIG, dans lequel les informations cryptographiques du premier utilisateur (310) et du second utilisateur (410) sont extraites d'une section « me concernant » des utilisateurs dans leurs profils d'OSN ;
la création (240) d'une demande modifiée (460) à partir de la demande d'amitié (450) en ajoutant une notification selon laquelle le premier utilisateur (310) est un membre du même SIG que le second utilisateur (410) lorsque le calcul de l'établissement de liaison cryptographique est réalisé ;
le transfert (250) de la demande modifiée (460) à un serveur d'OSN (330 ; 430) ;
la réception (260) d'une réponse (485) à la demande modifiée (460) au second utilisateur (410) par le biais du serveur d'OSN (330 ; 430) ; et
l'envoi (270) d'un message (395) au premier utilisateur (310) affirmant la qualité de membre conjointe du second utilisateur (410) lorsque le second utilisateur (410) a accepté la demande modifiée (460).

**2.** Support selon la revendication 1, dans lequel les informations cryptographiques du premier (310) et du second (410) utilisateurs sont un justificatif d'identité émis par une entité centrale.

**3.** Support selon la revendication 2, dans lequel le justificatif d'identité est une signature et l'établissement de liaison cryptographique est réalisé en utilisant des OSBE et/ou
dans lequel l'entité centrale comprend un nombre minimum d'utilisateurs autorisés agissant en coopération et/ou dans lequel le justificatif d'identité est émis par l'entité centrale après vérification du respect du membre de la politique d'adhésion du groupe d'intérêt secret.

**4.** Support selon la revendication 2 ou 3, dans lequel une révocation est définie pour le justificatif d'identité.

**5.** Procédé mis en oeuvre par ordinateur (200) pour la vérification de personnalités dans des réseaux sociaux en ligne (130), le procédé (200) étant réalisé au niveau d'un serveur mandataire (320 ; 420) et comprenant :

la réception (210) d'une demande d'amitié (450) d'un premier utilisateur de réseau social en ligne OSN (310) à un second utilisateur d'OSN (410) ;
la capture (220) de la demande d'amitié (450) ;
l'extraction (230) d'informations cryptographiques du premier utilisateur (310) et du second utilisateur (410) devant être utilisées pour le calcul d'un établissement de liaison cryptographique pour vérifier la qualité de membre du premier (310) et du second (410) utilisateurs dans un même groupe d'intérêt secret SIG, dans lequel les informations cryptographiques du premier utilisateur (310) et du second utilisateur (410) sont extraites d'une section «me concernant » des utilisateurs dans leurs profils d'OSN ;
la création (240) d'une demande modifiée (460) à partir de la demande d'amitié (450) en ajoutant une notification selon laquelle le premier utilisateur (310) est un membre du même SIG que le second utilisateur (410) lorsque le calcul de l'établissement de liaison cryptographique est réalisé ;
le transfert (250) de la demande modifiée (460) à un serveur d'OSN (330 ; 430) ;
la réception (260) d'une réponse à la demande modifiée (460) au second utilisateur (410) par le biais du serveur d'OSN (330 ; 430) ; et
l'envoi (270) d'un message au premier utilisateur (310) affirmant la qualité de membre conjointe du second utilisateur (410) lorsque le second utilisateur (410) a accepté la demande modifiée (460).

**6.** Procédé selon la revendication 5, dans lequel les informations cryptographiques du premier (310) et du second (410) utilisateurs sont un justificatif d'identité émis par une entité centrale.

**7.** Procédé selon la revendication 6, dans lequel le justificatif d'identité est une signature et l'établissement de liaison cryptographique est réalisé en utilisant des OSBE.

**8.** Procédé selon la revendication 6 ou 7, dans lequel l'entité centrale comprend un nombre minimum d'utilisateurs autorisés agissant en coopération et/ou dans lequel l'entité centrale émet le justificatif d'identité après vérification du respect du membre de la politique d'adhésion du groupe d'intérêt secret.

**9.** Procédé selon la revendication 6, 7 ou 8, dans lequel une révocation est définie pour le justificatif d'identité.

**10.** Système informatique pour la vérification de personnalités dans des réseaux sociaux en ligne OSN comprenant :

un ou plusieurs serveurs d'OSN (330 ; 430) au sein d'un OSN (130) ;
au moins deux utilisateurs d'OSN (310 ; 410) communiquant par le biais de l'OSN (130) ;
un serveur mandataire (320 ; 420) en communication avec le ou les serveurs d'OSN (330 ; 430), le serveur mandataire (320 ; 420) ayant un processeur en communication avec une mémoire comprenant des instructions devant être exécutées par le processeur pour
la réception (210) d'une demande d'amitié (450) d'un premier utilisateur de réseau social en ligne OSN (310) à un second utilisateur d'OSN (410) ;
la capture (220) de la demande d'amitié (450) ;
l'extraction (230) d'informations cryptographiques du premier utilisateur (310) et du second utilisateur (410) devant être utilisées pour le calcul d'un établissement de liaison cryptographique pour vérifier la qualité de membre du premier (310) et du second (410) utilisateurs dans un même groupe d'intérêt secret SIG, dans lequel les informations cryptographiques du premier utilisateur (310) et du second utilisateur (410) sont extraites d'une section «me concernant » des utilisateurs dans leurs profils d'OSN ;

la création (240) d'une demande modifiée (460) à partir de la demande d'amitié (450) en ajoutant une notification selon laquelle le premier utilisateur (310) est un membre du même SIG que le second utilisateur (410) lorsque le calcul de l'établissement de liaison cryptographique est réalisé ;

le transfert (250) de la demande modifiée (460) à un serveur d'OSN (330 ; 430) ;

la réception (260) d'une réponse à la demande modifiée (460) au second utilisateur (410) par le biais du serveur d'OSN (330 ; 430) ; et

l'envoi (270) d'un message au premier utilisateur (310) affirmant la qualité de membre conjointe du second utilisateur (410) lorsque le second utilisateur (410) a accepté la demande modifiée (460).

11. Système selon la revendication 10, dans lequel les informations cryptographiques sont un justificatif d'identité pour une qualité de membre de SIG spécifique émis par une entité centrale.

12. Système selon la revendication 10 ou 11, dans lequel le justificatif d'identité est une signature et l'établissement de liaison cryptographique est réalisé en utilisant des OSBE et/ou dans lequel une révocation est définie pour le justificatif d'identité et/ou dans lequel le serveur mandataire (320 ; 420) est un serveur mandataire http java.

**FIGURE 1A**

FIGURE 1B

200

```
                    ┌─────────┐
                    │  START  │
                    └────┬────┘
                         │            ╭─210
                         ▼
┌────────────────────────────────────────────┐
│ RECEIVE A FRIENDSHIP REQUEST FROM A FIRST    │
│ ONLINE SOCIAL NETWORK (OSN) USER TO A        │
│ SECOND OSN USER                              │
└────────────────────┬─────────────────────────┘
                     │             ╭─220
                     ▼
┌────────────────────────────────────────────┐
│ CAPTURE THE FRIENDSHIP REQUEST BY A PROXY    │
│ SERVER                                       │
└────────────────────┬─────────────────────────┘
                     │             ╭─230
                     ▼
┌────────────────────────────────────────────┐
│ EXTRACT CRYPTOGRAPHIC INFORMATION OF THE     │
│ FIRST AND THE SECOND USER BY THE PROXY       │
│ SERVER FOR COMPUTATION OF A CRYPTOGRAPHIC    │
│ HANDSHAKE                                    │
└────────────────────┬─────────────────────────┘
                     │             ╭─240
                     ▼
┌────────────────────────────────────────────┐
│ CREATING A MODIFIED REQUEST FROM THE         │
│ FRIENDSHIP REQUEST BY THE PROXY SERVER       │
│ THROUGH NOTIFYING THE SECOND USER THAT THE   │
│ FIRST USER IS A MEMBER OF THE SAME SECRET    │
│ INTEREST GROUP (SIG) AS THE SECOND USER      │
│ WHEN THE CRYPTOGRAPHIC HANDSHAKE IS          │
│ ACCOMPLISHED                                 │
└────────────────────┬─────────────────────────┘
                     │             ╭─250
                     ▼
┌────────────────────────────────────────────┐
│ FORWARD THE MODIFIED REQUEST TO AN OSN       │
│ SERVER                                       │
└────────────────────┬─────────────────────────┘
                     │             ╭─260
                     ▼
┌────────────────────────────────────────────┐
│ RECEIVE A RESPONSE TO THE MODIFIED REQUEST   │
│ BY THE SECOND USER VIA THE OSN SERVER        │
└────────────────────┬─────────────────────────┘
                     │             ╭─270
                     ▼
┌────────────────────────────────────────────┐
│ SEND A MESSAGE TO THE FIRST USER AFFIRMING   │
│ THE CO-MEMBERSHIP OF THE SECOND USER         │
└────────────────────┬─────────────────────────┘
                     │
                     ▼
                ┌─────────┐
                │   END   │
                └─────────┘
```

**FIGURE 2**

310

320

330

**1** POST http://www.OSNserver.com/ajax/profile/connect.php 340
form parameters:...profile_Id=xyz

**2** 345 GET http://www.OSNserver.com/profile.php?id=xyz

**3** 350
<dt>About me:</dt><dd> $g^{e1}$, $g^{r1}$ </dd>

Pick $g^{e2}$, $g^{r2}$, N, compute $k_2$

355 POST http://www.OSNserver.com/ajax/profile/connect.php

**4** form parameters:...profile_Id=xyz&message=$g^{e2}$, $g^{r2}$, $E_{k2}(N)$
360

**5** GET http://0.channel04.OSNserver.com/x/.../true/p_...=0  GET http://0.channel04.OSNserver.com/x/.../true/p_...=0

365

**6** for(;;);{"t":"continue"}  a href="http://www.OSNserver.com/profile.php?id=xyz\">...</a> accepted your friend request

370 GET http://www.OSNserver.com/inbox/

**7**

375

**8** ..."thread_ID":{"subject":"AAAproxy","snippet":"...","original Author ":xyz...

GET http://www.OSNserver.com/glgaboxx/endpoint/
**9** 380  ReadThread.php?tId=thread_ID

385

**10** ..."message":"M"...

Check that $M=E_{k2}(N+1)$

390 GET http://0.channel04.OSNserver.com/x/.../true/p_...=0

**11** GET http://0.channel04.OSNserver.com/x/.../true/p_...=0

395

**12** <a href="http://www.OSNserver.com/profile.php?id=xyz\">...-**certified**  for(;;);{"t":"continue"}
**SIG member**</a> accepted your friend request

**FIGURE 3**

410

420

440

POST http://www.OSNserver.com/ajax/profile/editinfo.php

430

form parameters:...about_me=g^{e1},g^{r1}

445    200 OK

GET http://www.OSNserver.com/reqs.php

GET http://www.OSNserver.com/reqs.php    450

455

Check authenticity of M,decrypt N=D_{k1}(M), compute
M'=E_{k1}(N+1)

460

<a href="http://www.OSNserver.com/profile.php?id=xyz\">...</a>
<span class="msg_content">g^{e2},g^{r2},M</span>

<a href="http://www.OSNserver.com/profile.php?id=xyz\">...
certified SIG member</a><span class="msg_content">--
crypto handshake omitted--</span>

POST http://www.OSNserver.com/ajax/reqs.php    465

POST http://www.OSNserver.com/gigaboxx/endpoint/
MessageComposerEndpoint.php    467

form parameters:...id=xyz

470

form parameters:...status=M'&subject=AAAproxy&lds[0]=xyz

for(;;);{"error":...,"errorSummary":"Security Check Required"...

for(;;);{"error":...,"errorSummary":"Security Check Required"...
POST http://www.OSNserver.com/gigaboxx/endpoint/
MessageComposerEndpoint.php    477

POST http://www.OSNserver.com/reqs.php    475
form parameters:captcha_response=...&id=xyz

from parameters:...status=M'&subject=AAAproxy&lds[0]=xyz&
captcha_response=...

480    200 OK

485 POST http://www.OSNserver.com/ajax/reqs.php

490    form parameters:...id=xyz

"msg":"You are now friends with <a href="http://www.OSNserver.com/
profile.php?id=xyz">...

495

"msg":"You are now friends with<a href="http://
www.OSNserver.com/profile.php?id=xyz">...

## FIGURE 4

**FIGURE 5**

EP 2 365 679 B1

**FIGURE 6**

EP 2 365 679 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **L.P. COX et al.** SmokeScreen: Flexible Privacy Controls for Presence-Sharing. *MobiSys'07,* 11 June 2007